# EUROPEAN PATENT SPECIFICATION

(11) **EP 3 702 112 B1**
(45) Date of publication and mention of the grant of the patent: **10.11.2021**
(21) Application number: 20159186.4
(22) Date of filing: 25.02.2020
(51) Int. Cl.: B25J 17/00

(54) **ROBOT HEAD AND NECK ASSEMBLY, AND ROBOT**
ROBOTERKOPF UND HALSANORDNUNG SOWIE ROBOTER
ENSEMBLE TÊTE ET COU DE ROBOT ET ROBOT

(30) Priority: 01.03.2019 CN 201910154369
(43) Date of publication of application: 02.09.2020
(73) Proprietor: Cloudminds (Beijing) Technologies Co., Ltd., Fangshan District, Beijing (CN); Cloudminds Robotics Co., Ltd., Shanghai 201100 (CN)
(72) Inventor: Cui, Haotian, Fangshan District, Beijing (CN); Yan, Xunge, Fangshan District, Beijing (CN); Huang, William Xiao-Qing, Fangshan District, Beijing (CN); Luo, Cheng, Fangshan District, Beijing (CN); Zhang, Yufeng, Fangshan District, Beijing (CN)
(74) Representative: Gulde & Partner

(56) References cited:
- JP-A- 2003 269 579
- JP-A- 2005 125 469
- US-A1- 2009 118 865
- INNFOS TECHNOLOGY: "INNFOS XR-1 Robot--the intelligent service robot powered by INNFOS SCA", YouTube, 24 February 2019 (2019-02-24), pages 1-1, XP054980621, Retrieved from the Internet: URL:https://www.youtube.com/watch?v=a4i8P5 0lG9k [retrieved on 2020-06-24]

## Description

### TECHNICAL FIELD

Embodiments of the present application relate to the technical field of robots, and in particular, relate to a robot head and neck assembly and a robot.

### BACKGROUND

A robot head and neck assembly is a top structural component of a robot, and is an important component for a user to make man-machine interactions.

During the implementation of the present application, the inventors have identified that: At present, the robot head and neck assembly is generally divided into a robot head and neck skeleton and a case skin. The robot head and neck skeleton is directly lapped to the skin to form the robot head and neck assembly. If the appearance of the robot head and neck needs to be changed, the whole robot head and neck skeleton needs to be replaced, which has a high cost and is very complicated.

A YouTube video "INNFOS XR-1 Robot - the intelligent service robot powered by INNOFOS SCA" (URL: https://www.youtube.com/watch?v=a4i8P50IG9K) discloses a service robot with head and neck assembly.

US 2009 118 865 A1 describes a robot having a camera mount that is movable along a curved surface of an upper part of the head, on a front side thereof, and two units of cameras that are mounted in the camera mount.

JP 2005 125 469 A discloses a swing mechanism 5 of a humanoid robot that tilts a neck frame 6 supporting a head 4 back and forth with respect to a body 1 at least around a pitch axis P and left and right around a yaw axis Y.

JP 2003 269 579 A discloses a cervical drive mechanism 222 for a robot device 1.

### SUMMARY

In view of the defects in the related art, embodiments of the present application are mainly intended to provide a robot head and neck assembly and a robot, wherein the appearance of a robot head and neck may be changed only by replacing the robot head and neck outer skeleton, with no need to wholly replace the robot head and neck assembly, and the cost is very low.

To solve the above technical problems, one technical solution of embodiments of the present application is to provide a robot head and neck assembly. The robot head and neck assembly includes: a head and neck inner skeleton; and a head and neck outer skeleton, disposed on an outer side of the head and neck inner skeleton, and wrapping the head and neck inner skeleton, wherein the head and neck inner skeleton includes a first connecting member, a swing head actuator, a second connecting member, a lift head actuator, and a rotate head actuator; wherein the first connecting member is connected to an output end of the swing head actuator, a case of the swing head actuator is connected to one end of the second connecting member, the other end of the second connecting member is connected to an output end of the lift head actuator, and an output end of the rotate head actuator is connected to a case of the lift head actuator, wherein the head and neck outer skeleton includes a skull outer skeleton, a head outer skeleton, a swing head outer skeleton, a lift head outer skeleton, and a rotate head outer skeleton; wherein the skull outer skeleton is connected to the head outer skeleton, the head outer skeleton wraps and is connected to the first connecting member, the swing head outer skeleton is connected to the second connecting member, the swing head outer skeleton wraps the second connecting member and the swing head actuator, the lift head outer skeleton wraps and is connected to the lift head actuator, and the rotate head outer skeleton wraps and is connected to the rotate head actuator.

Optionally, the skull outer skeleton is provided with a first positioning boss, and the head outer skeleton is provided with a first positioning groove, the first positioning boss being snap-fitted to the first positioning groove.

Optionally, the head outer skeleton includes a head left outer skeleton and a head right outer skeleton, the head left outer skeleton being connected to the head right outer skeleton, and the head left outer skeleton and the head right outer skeleton wrapping and being connected to the first connecting member.

Optionally, the head left outer skeleton is provided with a second positioning boss, and the head right outer skeleton is provided with a second positioning groove, the second positioning boss being snap-fitted to the second positioning groove.

Optionally, the swing head outer skeleton includes a swing head front outer skeleton, a swing head rear outer skeleton, and a connecting piece, the swing head front outer skeleton being connected to the swing head rear outer skeleton by the connecting piece, and wrapping and being connected to the second connecting member, and the swing head front outer skeleton and the swing head rear outer skeleton wrapping the swing head actuator.

Optionally, the lift head outer skeleton includes a lift head front outer skeleton and a lift head rear outer skeleton, the lift head front outer skeleton being connected to the lift head rear outer skeleton and wrapping the lift head actuator, and the lift head front outer skeleton and the lift head rear outer skeleton being both connected to the case of the lift head actuator.

Optionally, the rotate head outer skeleton includes a rotate head front outer skeleton and a rotate head rear outer skeleton, the rotate head front outer skeleton and the rotate head rear outer skeleton being both connected to a case of the rotate head actuator, the rotate head front outer skeleton being connected the rotate head rear outer skeleton and wrapping the rotate head actuator.

Optionally, the robot head and neck assembly further includes an outer skin, the outer skin including a skull outer skin, a head outer skin, a swing head outer skin and a lift head outer skin, the skull outer skin being connected to the skull outer skeleton and the head outer skeleton, the head outer skin being connected to the head outer skeleton;

wherein the swing head outer skin is connected to the swing head outer skeleton, and the lift head skin is connected to the lift head outer skeleton.

Optionally, the head and neck outer skeleton is made of a lightweight material.

To solve the technical problems, another technical solution of embodiments of the present application is to provide a robot. The robot includes the robot head and neck assembly as described above.

The embodiments of the present invention achieve the following beneficial effects:

Different from the related art, in the embodiments of the present application, the robot head and neck assembly includes the head and neck inner skeleton and the head and neck outer skeleton. The head and neck outer skeleton is disposed outside the head and neck inner skeleton, and wraps the head and neck inner skeleton. The head and neck inner skeleton is configured to define a movement structure of the robot head and neck, and the head and neck outer skeleton is configured to define the appearance and shape of the robot head and neck. Therefore, the appearance of the robot head and neck may be changed by replacing the head and neck outer skeleton, with no need to wholly replace the robot head and neck assembly. In this way, the cost of the replacement is low, and the replacement is convenient.

### BRIEF DESCRIPTION OF THE DRAWINGS

For clearer descriptions of the technical solutions according to the specific embodiments of the present application or the technical solutions in the related art, the accompanying drawings incorporated for illustrating the specific embodiments or the related art are briefly described hereinafter. In all the accompanying drawings, like elements or parts are generally denoted by like reference numerals. In the accompanying drawings, various elements or parts are not necessarily drawn according to the actual scale.
FIG. 1 is a sectional view of a robot head and neck assembly according to an embodiment of the present application;
FIG. 2 is an exploded view of a robot head and neck assembly according to an embodiment of the present application;
FIG. 3 is a schematic view of a head and neck inner skeleton in the robot head and neck assembly according to an embodiment of the present application;
FIG. 4 is an exploded view of the head and neck inner skeleton in the robot head and neck assembly according to an embodiment of the present application;
FIG. 5 is a schematic view of a head and neck outer skeleton in the robot head and neck assembly according to an embodiment of the present application;
FIG. 6 is a schematic view of a first connecting member and the head outer skeleton in the robot head and neck assembly according to an embodiment of the present application;
FIG. 7 is a partially enlarged view of a head left outer skeleton in the robot head and neck assembly according to an embodiment of the present application;
FIG. 8 is a partially enlarged view of a head right outer skeleton in the robot head and neck assembly according to an embodiment of the present application;
FIG. 9 is a schematic view of a skull outer skeleton and the head outer skeleton in the robot head and neck assembly according to an embodiment of the present application;
FIG. 10 is a partially enlarged view of the head outer skeleton in the robot head and neck assembly according to an embodiment of the present application;
FIG. 11 is a schematic view of a swing head actuator, a second connecting member and a swing head outer skeleton in the robot head and neck assembly according to an embodiment of the present application;
FIG. 12 is a schematic view of a portion of members in the robot head and neck assembly according to an embodiment of the present application;
FIG. 13 is an exploded view of an outer skin in the robot head and neck assembly according to an embodiment of the present application; and
FIG. 14 is another exploded view of an outer skin in the robot head and neck assembly according to an embodiment of the present application.

### Reference numerals and denotations thereof:

Robot head and neck assembly 20;
Head and neck inner skeleton 21;
Head and neck outer skeleton 22;
Outer skin 23;
First connecting member 211;
Swing head actuator 212;
Second connecting member 213;
Lift head actuator 214;
Rotate head actuator 215;
Top plate 2111;
First connecting stand late 2112;
Second connecting stand late 2113;
Third connecting stand late 2131;
Fourth connecting stand late 2132;
Connecting boss 2141;
Connecting groove 2151;
Head outer skeleton 221;
Skull outer skeleton 222;
Swing head outer skeleton 223;
Lift head outer skeleton 224;
Rotate head outer skeleton 225;
Head left outer skeleton 2211;
Head right outer skeleton 2212;
Second positioning boss 2211a;
Second positioning groove 2212a;
First positioning groove 2213;
First positioning boss 2221;
Swing head front outer skeleton 2231;
Swing head rear outer skeleton 2232;
Connecting piece 2233;
Lift head front outer skeleton 2241;
Lift head rear outer skeleton 2242;
Skull outer skin 231;
Head outer skin 232;
Swing head outer skin 233;
Lift head outer skin 234;
Rotate head front outer skeleton 2251;
Rotate head rear outer skeleton 2252.

### DETAILED DESCRIPTION

The embodiments containing the technical solutions of the present application are described in detail with reference to the accompanying drawings. The embodiments hereinafter are only used to clearly describe the technical solutions of the present application. Therefore, these embodiments are only used as examples, but are not intended to limit the protection scope of the present application.

It should be noted that unless otherwise specified, the technical terms and scientific terms used in the present application shall express general meanings that may be understood by a person skilled in the art.

In the description of the present application, it should be understood that the terms "central", "longitudinal", "transversal", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like indicate orientations and position relationships which are based on the illustrations in the accompanying drawings, and these terms are merely for ease and brevity of the description, instead of indicating or implying that the devices or elements shall have a particular orientation and shall be structured and operated based on the particular orientation. Accordingly, these terms shall not be construed as limiting the present application.

In addition, terms of "first", "second" are only used for description, but shall not be understood as indication or implication of relative importance or implicit indication of the number of the specific technical features. In the description of the present application, the term "more" or "a plurality of" signifies at least two, unless otherwise specified.

In the description of the present application, it should be noted that unless otherwise specified and defined, the terms "mounted", "coupled", "connected" and "fixed" and derivative forms thereof shall be understood in a broad sense, which, for example, may be understood as fixed connection, detachable connection or integral connection; may be understood as mechanical connection or electrical connection, or understood as direct connection, indirect connection via an intermediate medium, or communication between the interiors of two elements or interactions between two elements. Persons of ordinary skill in the art may understand the specific meanings of the above terms in the present application according to the actual circumstances and contexts.

In the present application, unless otherwise specified or defined, by defining that a first feature is disposed "above" or "below" or "beneath" a second feature, it may be meant that the first feature is in direct contact with the second feature, or the first feature is in indirect contact with the second feature via an intermediate medium. In addition, by defining that a first feature is disposed "over" or "above" a second feature, it may be meant that the first feature is rightly over the second feature or is obliquely above the second feature, or the horizontal height of the first feature is greater than that of the second feature. In addition, by defining that a first feature is disposed "under" or "blow, or "beneath" a second feature, it may be meant that the first feature is rightly under the second feature or is obliquely below the second feature, or the horizontal height of the first feature is less than that of the second feature.

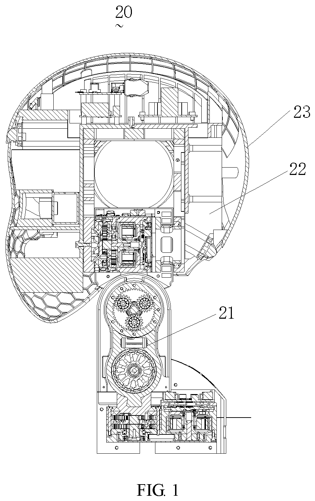

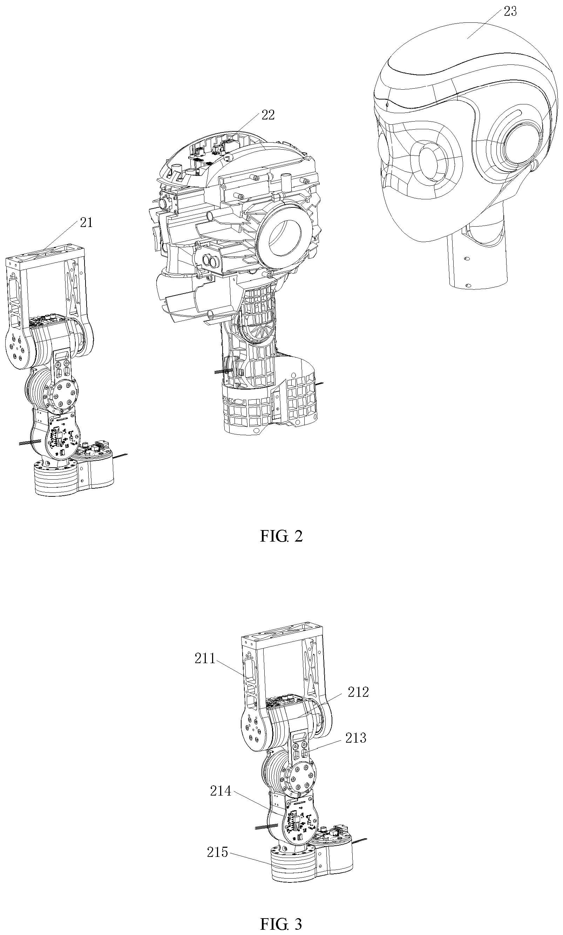

Referring to FIG. 1 and FIG. 2, a robot head and neck assembly 20 includes a head and neck inner skeleton 21, a head and neck outer skeleton 22, and an outer skin 23. The head and neck outer skeleton 22 is disposed on an outer side of the head and neck inner skeleton 21, and wraps the head and neck inner skeleton 21. The head and neck outer skeleton 22 is a part forming the appearance of a robot head and neck. The outer skin 23 is disposed on an outer side of the head and neck outer skeleton 22, and is a part forming the skin of a robot head and neck.

With respect to the head and neck inner skeleton 21, as illustrated in FIG. 3, the head and neck inner skeleton 21 includes a first connecting member 211, a swing head actuator 212, a second connecting member 213, a lift head actuator 214, and a rotate head actuator 215.

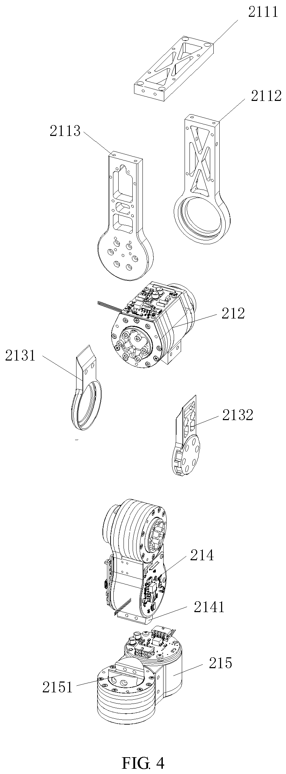

With respect to the first connecting member 211 and the swing head actuator 212, as illustrated in FIG. 4, the first connecting member 211 includes a top plate 2111, a first connecting stand plate 2112, and a second connecting stand plate 2113. Two ends of the top plate 2111 are respectively threaded to one end of the first connecting stand plate 2112 and one end of the second connecting stand plate 2113. The other end of the first connecting stand plate 2112 is rotatably connected to a case of the swing head actuator 212, and the other end of the second connecting stand plate 2113 is threaded to an output end of the swing head actuator 212, such that the first connecting member 211 is connected to the output end of the swing head actuator 212. In some other embodiments, the other end of the first connecting stand plate 2112 may be rotatably connected to the case of the swing head actuator 212 optionally by gap fitting or bearing connection or the like.

It may be understood that both the two ends of the top plate 2111 may be respectively connected to the first connecting stand plate 2112 and the second connecting stand plate 2113, and the second connecting stand plate 2113 may be connected to the output end of the swing head actuator 212 in other modes, for example, snap-fitting connection or the like, other than the connection modes as described above.

With respect to the second connecting member 213 and the lift head actuator 214, still referring to FIG. 4, the second connecting member 213 includes a third connecting stand plate 2131 and a fourth connecting stand plate 2132. One end of the third connecting stand plate 2131 and one end of the fourth connecting stand plate 2132 are respectively threaded to the case of the swing head actuator 212, such that the case of the swing head actuator 212 is connected to one end of the second connecting member 213. The other end of the fourth connecting stand plate 2132 is threaded to an output end of the lift head actuator 214, and the other end of the third connecting stand plate 2131 is rotatably connected to a case of the lift head actuator 214, such that the other end of the second connecting member 213 is connected to an output end of the lift head actuator 214. The case of the lift head actuator 214 is provided with a connection boss 2141. In some other embodiments, the other end of the third connecting stand plate 2131 may be rotatably connected to the case of the lift head actuator 214 optionally by gap fitting or bearing connection or the like.

It may be understood that both the third connecting stand plate 2131 and the fourth connecting stand plate 2132 may be respectively connected to the case of the swing head actuator 212, and the fourth connecting stand plate 2132 may be connected to the output end of the lift head actuator 214 in other modes, for example, snap-fitting connection or the like, other than the connection modes as described above. The first connecting member 211 and the second connecting member 213 may also be other devices achieving the same connection effect, which are not described herein any further.

With respect to the rotate head actuator 215, still referring to FIG. 4, an output end of the rotate head actuator 215 is provided with a connecting groove 2151. The connecting boss 2141 is snapped into the connecting groove 2151, and the connecting boss 2141 is in interference fit with the connecting groove 2151, such that the output end of the rotate head actuator 215 is connected to the case of the lift head actuator 214. In some embodiments, the rotate head actuator 215 may be an outer rotor actuator, and the output end of the rotate head actuator 215 may be a flange, such that the output end of the rotate head actuator 215 outputs a greater torque.

It may be understood that male-female engagement between the connecting boss 2141 and the connecting groove 2151 may be practiced in other modes other than the mode as described above, which are not described herein any further. The output end of the rotate head actuator 215 may also be connected to the case of the lift head actuator 214 in other modes other that the connection mode as described above, which are not described herein any further.

In summary, the head and neck inner skeleton 21 is divided into the first connecting member 211, the swing head actuator 212, the second connecting member 213, the lift head actuator 214, and the rotate head actuator 215, and these actuators and connecting members are connected in a detachable mode, such that modularized design of the head and neck inner skeleton 21 is implemented, which is favorable to assembling, repair and part replacement of the head and neck inner skeleton 21. Nevertheless, with respect to different types of head and neck inner skeletons 21 or head and neck inner skeletons 21 imposing different design requirements, these head and neck inner skeletons impose different requirements on degree of freedom. Correspondingly, the number of actuators and the number of connecting members of the head and neck inner skeletons 21 are also different, which are not described herein any further.

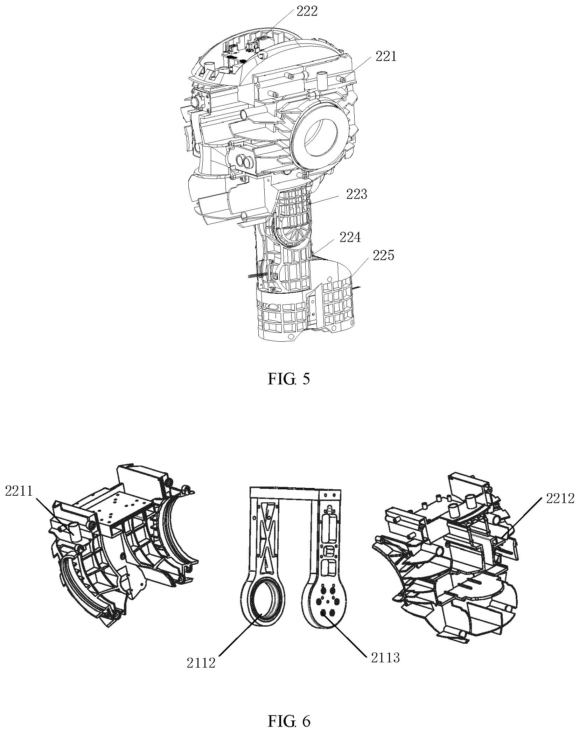

With respect to the head and neck outer skeleton 22, as illustrated in FIG. 5, the head and neck outer skeleton 22 includes a head outer skeleton 221, a skull outer skeleton 222, a swing head outer skeleton 223, a lift head outer skeleton 224, and a rotate head outer skeleton 225.

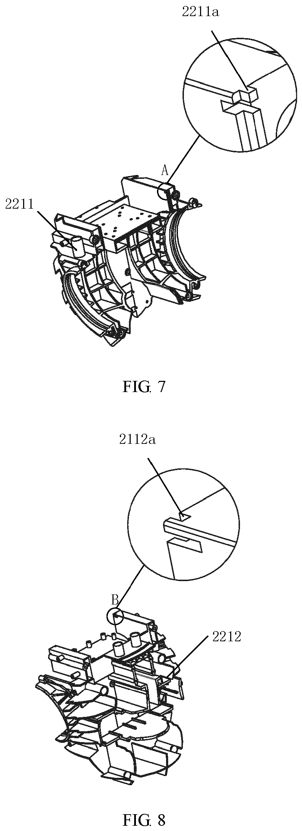

With respect to the head outer skeleton 221, as illustrated in FIG. 6 to FIG. 10, the head outer skeleton 221 includes a head left outer skeleton 2211 and a head right outer skeleton 2212. The head left outer skeleton 2211 is provided with a second positioning boss 2211a, and the head right outer skeleton 2212 is provided with a second positioning groove 2212a. The head left outer skeleton 2211 is threaded to the first connecting stand plate 2112, and the head right outer skeleton 2212 is threaded to the second connecting stand plate 2113, such that the head outer skeleton 221 is connected to the first connecting member 211. In the process of threading the head left outer skeleton 2211 to the first connecting stand plate 2112 and threading the head right outer skeleton 2212 to the second connecting stand plate 2113, the second positioning boss 2211a and the second positioning groove 2212a achieve an effect of guiding interconnection between the head left outer skeleton 2211 and the head right outer skeleton 2212. Upon completion of threading of the head left outer skeleton 2211 to the first connecting stand plate 2112 and threading of the head right outer skeleton 2212 and the second connecting stand plate 2113, the second positioning boss 2211a is snapped into the second positioning groove 2212a. The head left outer skeleton 2211 and the head right outer skeleton 2212, when being connected to the first connecting member 211, collaboratively wrap the first connecting member 211, such that a head appearance model of the robot is formed. In some embodiments, the head left outer skeleton 2211 may also be fixed to the head right outer skeleton 2212 by threading, and in this situation, the head left outer skeleton 2211 and the head right outer skeleton 2212 further collaboratively form a first positioning groove 2213.

It may be understood that the head left outer skeleton 2211 may be connected to the first connecting stand plate 2112, the head right outer skeleton 2212 may be connected to the second connecting stand plate 2113, and the head left outer skeleton 2211 may be connected to the head right outer skeleton 2212 all in other modes other than the connection modes as described above, which are not described herein any further. In addition, the first positioning groove 2213 may also be formed in other modes. For example, the first positioning groove 2213 may be directly disposed on the head left outer skeleton 2211 or the head right outer skeleton 2212.

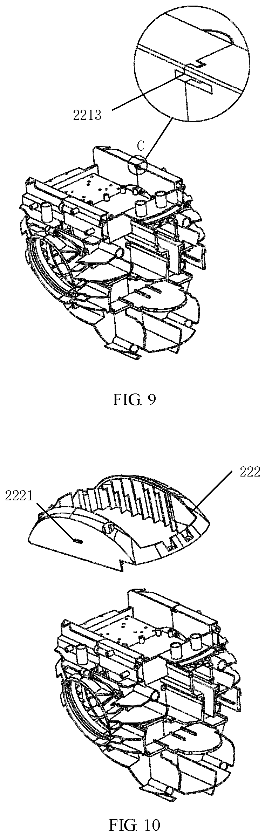

With respect to the skull outer skeleton 222, still referring to FIG. 10, the skull outer skeleton 222 forms a skull appearance model of the robot. The skull outer skeleton 222 is provided with a first positioning boss 2221. The skull outer skeleton 222 is threaded to the head left outer skeleton 2211 and the head right outer skeleton 2212 respectively, such that the skull outer skeleton 222 is connected to the head outer skeleton 221. In the process of connecting the skull outer skeleton 222 to the head outer skeleton 221, the first positioning boss 2221 and the first positioning groove 2213 achieve an effect of guiding interconnection between the skull outer skeleton 222 and the head outer skeleton 221. Upon completion of threading of the skull outer skeleton 222 to the head left outer skeleton 2211 and the head right outer skeleton 2212 respectively, the first positioning boss 2221 is snapped into the first positioning groove 2213. In addition, in some embodiments, the number of first positioning bosses 2221 and first positioning grooves 2213, and the number of second positioning bosses 2211a and second positioning grooves 2212a may be larger. One first positioning boss 2221 is snapped into one first positioning groove 2213, and one second positioning boss 2211a is snapped into one second positioning groove 2212a.

It may be understood that the skull outer skeleton 222 may be connected to the head left outer skeleton 2211 and the head right outer skeleton 2212 in other modes other than the connection mode as described above, which are not described herein any further. Further, the first positioning boss 2221 and the first positioning groove 2213, and the second positioning boss 2211a and the second positioning groove 2212a may also be other structures having the same positioning functions, which are not described herein any further.

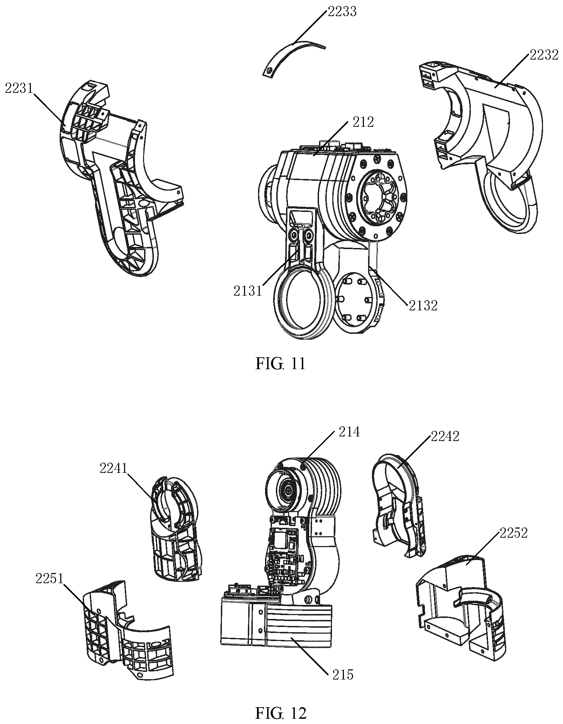

With respect to the swing head outer skeleton 223, as illustrated in FIG. 11, the swing head outer skeleton 223 includes a swing head front outer skeleton 2231, a swing head rear outer skeleton 2232, and a connecting piece 2233. One end of the swing head front outer skeleton 2231 is threaded to the third connecting stand plate 2131, and one end of the swing head rear outer skeleton 2232 is threaded to the fourth connecting stand plate 2132, such that the swing head outer skeleton 223 is connected to the second connecting member 213. Two ends of the connecting piece 2233 are respectively threaded to the swing head front outer skeleton 2231 and the swing head rear outer skeleton 2232; and the connecting piece 2233, the swing head front outer skeleton 2231, and the swing head rear outer skeleton 2232 collaboratively wrap and protect the second connecting member 213 and the swing head actuator 212.

With respect to the lift head outer skeleton 224, as illustrated in FIG. 12, the lift head outer skeleton 224 includes a lift head front outer skeleton 2241 and a lift head rear outer skeleton 2242. The lift head front outer skeleton 2241 and the lift head rear outer skeleton 2242 are both threaded to the case of the lift head actuator 214, such that the lift head outer skeleton 224 is connected to a case of the lift head actuator 214. The lift head front outer skeleton 2241 and the lift head rear outer skeleton 2242 collaboratively wrap and protect the lift head actuator 214. In some embodiments, the lift head front outer skeleton 2241 and the lift head rear outer skeleton 2242 may also be threaded to each other.

With respect to the rotate head outer skeleton 225, as illustrated in FIG. 12, the rotate head outer skeleton 225 includes a rotate head front outer skeleton 2251 and a rotate head rear outer skeleton 2252. The rotate head front outer skeleton 2251 and the rotate head rear outer skeleton 2252 are both threaded to a case of the rotate head actuator 215, such that the rotate head outer skeleton 225 is connected to the case of the rotate head actuator 215. The rotate head front outer skeleton 2251 and the rotate head rear outer skeleton 2252 collaboratively wrap and protect the rotate head actuator 215. In some embodiments, the rotate head front outer skeleton 2251 and the rotate head rear outer skeleton 2252 may also be threaded to each other.

It may be understood that the swing head front outer skeleton 2231 may be connected to the third connecting stand plate 2131, the swing head rear outer skeleton 2232 may be connected to the fourth connecting stand plate 2132, the connecting piece 2232 may be connected to the swing head front outer skeleton 2231 and the swing head rear outer skeleton 2232 respectively, the lift head front outer skeleton 2241 and the lift head rear outer skeleton 2242 may be respectively connected to the lift head actuator 214, the lift head front outer skeleton 2241 may be connected to the lift head rear outer skeleton 2242, the rotate head front outer skeleton 2251 and the rotate head rear outer skeleton 2252 may be respectively connected to the rotate head actuator 215, and the rotate head front outer skeleton 2251 may be connected to the rotate head rear outer skeleton 2252 all in other modes other than the connection modes as described above, which are not described herein any further.

The head and neck outer skeleton 22 is divided into the head outer skeleton 221, the skull outer skeleton 222, the swing head outer skeleton 223, the lift head outer skeleton 224, and the rotate head outer skeleton 225. The head outer skeleton 221, the skull outer skeleton 222, the swing head outer skeleton 223, the lift head outer skeleton 224, and the rotate head outer skeleton 225 respectively wrap the corresponding actuators and connecting members, such that the modularized design of the head and neck outer skeleton 22 is implemented, which is favorable to assembling, repair, and part replacement of the head and neck outer skeleton 22. Nevertheless, with respect to different types of head and neck inner skeletons 21 or head and neck inner skeletons 21 imposing different design requirements, these head and neck inner skeletons impose different requirements on degree of freedom. Correspondingly, the number of actuators and the number of connecting members of the head and neck inner skeletons 21 are also different, and thus the modularized design of the head and neck outer skeleton 22 needs to be changed. In other embodiments, considering that the complexities of the actuators and connecting members of the head and neck inner skeleton 21 are different, correspondingly, further divisions of the correspondingly types of the outer skeletons are also different, which are not described herein any further.

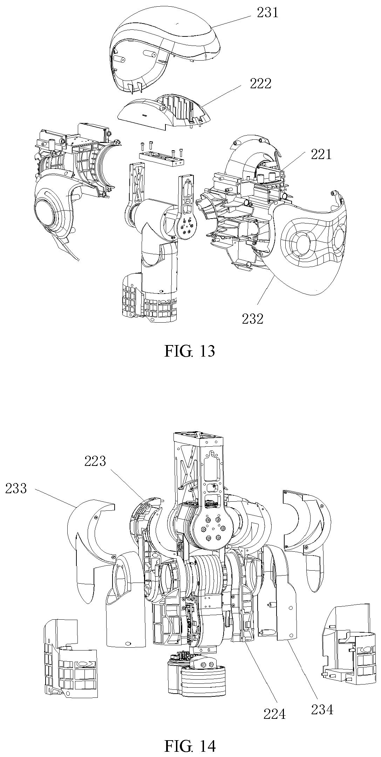

With respect to the outer skin 23, as illustrated in FIG. 13 and FIG. 14, the outer skin 23 includes a skull outer skin 231, a head outer skin 232, a swing head outer skin 233, and a lift head outer skin 234. The skull outer skin 231 is connected to the skull outer skeleton 222 and the head outer skeleton 221 respectively, such that an appearance skin of the skull of the robot is formed. The head outer skin 232 is connected to the head outer skeleton 221, such that a head appearance skin of the robot is formed. The swing head outer skin 233 is connected to the swing head outer skeleton 223, and the lift head outer skin 234 is connected to the lift head outer skeleton 224, such that a neck skin appearance of the robot is formed.

It should be noted that the skull outer skin 231, the head outer skin 232, the swing head outer skin 233, and the lift head outer skin 234 may all be detachably connected to the head and neck inner skeleton 21 by thread connection, snap-fitting connection or the like.

It may be understood that different types of robots impose different requirements on appearance skin, and therefore, in other embodiments, the head and neck outer skeleton 22 may have one or a plurality of portions thereof coated with the skin 23. Alternatively, the robot head and neck assembly 20 may also not include the outer skin 23, such that different requirements on appearance skin imposed by different robots are accommodated.

In some embodiments, the density of the head and neck outer skeleton 22 is smaller than the density of the head and neck inner skeleton 21; and relative to an integrally-designed robot head and neck skeleton, the head and neck outer skeleton is lighter. Optionally, the head and neck outer skeleton 22 is made of plastic materials with a lighter weight, and may be manufactured by an injection-molding process. This process features lower cost and fewer restrictions on the appearance and shape, and thus diversified appearances of the robots may be achieved. In addition, by this process, the overall weight of the robot head and neck may be lowered, such that the robot head and neck assembly is light-weighted.

It may be understood that the head and neck outer skeleton 22 may also be manufactured by low-density and light-weighted materials other than the materials as descried above, which are not described herein any further.

In the embodiment of the present application, the robot head and neck assembly 20 is divided into the head and neck inner skeleton 21 and the head and neck outer skeleton 22. The head and neck outer skeleton 22 is disposed outside the head and neck inner skeleton 21, and wraps the head and neck inner skeleton 21. The head and neck inner skeleton 21 is configured to define a movement structure of the robot head and neck, and the head and neck outer skeleton 22 is configured to define the appearance and shape of the robot head and neck. Therefore, in the present application, the appearance of the robot head and neck may be changed by replacing the head and neck outer skeleton 22, with no need to wholly replace the robot head and neck assembly 20. In this way, the cost of the replacement is low, and the replacement is convenient. In addition, the head and neck outer skeleton 22 is made of lightweight materials, which may reduce the overall weight of the robot head and neck assembly 20, make the assembly lighter, and lower the cost.

An embodiment of the present application further provides a robot. The robot includes a robot head and neck assembly. The structure and functionality of the robot head and neck assembly are the same as those of the robot head and neck assembly as described in the above embodiments. For details of the structure and functionality, reference may be made to the above embodiments, which are not described herein any further.

It should be finally noted that the above-described embodiments are merely for illustration of the present application, but are not intended to limit the present application. Although the present application is described in detail with reference to these embodiments, a person skilled in the art may also make various modifications to the technical solutions disclosed in the embodiments, or make equivalent replacements to a part of or all technical features contained therein. Such modifications or replacement, made without departing from the principles of the present application, shall fall within the scope defined by the claims and the specification of the present application. Especially, various technical features mentioned in various embodiments may be combined in any mode as long as there is no structural conflict. The present application is not limited to the specific embodiments described herein in this specification, but also includes all the technical solutions falling within the scope subject to the appended claims.

## Claims

1. A robot head and neck assembly (20), comprising:
a head and neck inner skeleton (21); and
a head and neck outer skeleton (22), disposed on an outer side of the head and neck inner skeleton (21), and wrapping the head and neck inner skeleton (21), wherein
the head and neck inner skeleton (21) comprises a first connecting member (211), a swing head actuator (212), a second connecting member (213), a lift head actuator (214), and a rotate head actuator (215);
wherein the first connecting member (211) is connected to an output end of the swing head actuator (212), a case of the swing head actuator (212) is connected to one end of the second connecting member (213), the other end of the second connecting member (213) is connected to an output end of the lift head actuator (214), and an output end of the rotate head actuator (215) is connected to a case of the lift head actuator (214), **characterized in that**
the head and neck outer skeleton (22) comprises a skull outer skeleton (222), a head outer skeleton (221), a swing head outer skeleton (223), a lift head outer skeleton (224), and a rotate head outer skeleton (225);
wherein the skull outer skeleton (222) is connected to the head outer skeleton (221), the head outer skeleton (221) wraps and is connected to the first connecting member (211), the swing head outer skeleton (223) is connected to the second connecting member (213), the swing head outer skeleton (223) wraps the second connecting member (213) and the swing head actuator (212), the lift head outer skeleton (224) wraps and is connected to the lift head actuator (214), and the rotate head outer skeleton (225) wraps and is connected to the rotate head actuator (215).

2. The robot head and neck assembly (20) according to claim 1, wherein:
the skull outer skeleton (222) is provided with a first positioning boss (2221), and the head outer skeleton (221) is provided with a first positioning groove (2213), the first positioning boss (2221) being snap-fitted to the first positioning groove (2213).

3. The robot head and neck assembly (20) according to claim 1, wherein:
the head outer skeleton (221) comprises a head left outer skeleton (2211) and a head right outer skeleton (2212), the head left outer skeleton (2211) being connected to the head right outer skeleton (2212), and the head left outer skeleton (2211) and the head right outer skeleton (2212) wrapping and being connected to the first connecting member (211).

4. The robot head and neck assembly (20) according to claim 3, wherein:
the head left outer skeleton (2211) is provided with a second positioning boss (2211a), and the head right outer skeleton (2212) is provided with a second positioning groove (2212a), the second positioning boss (2211a) being snap-fitted to the second positioning groove (2212a).

5. The robot head and neck assembly (20) according to claim 1, wherein:
the swing head outer skeleton (223) comprises a swing head front outer skeleton (2231), a swing head rear outer skeleton (2232), and a connecting piece (2233), the swing head front outer skeleton (2231) being connected to the swing head rear outer skeleton (2232) by the connecting piece (2233), and wrapping and being connected to the second connecting member (213), and the swing head front outer skeleton (2231) and the swing head rear outer skeleton (2232) wrapping the swing head actuator (212).

6. The robot head and neck assembly (20) according to claim 1, wherein:
the lift head outer skeleton (224) comprises a lift head front outer skeleton (2241) and a lift head rear outer skeleton (2242), the lift head front outer skeleton (2241) being connected to the lift head rear outer skeleton (2242) and wrapping the lift head actuator (214), and the lift head front outer skeleton (2241) and the lift head rear outer skeleton (2242) being both connected to the case of the lift head actuator (214).

7. The robot head and neck assembly (20) according to claim 1, wherein:
the rotate head outer skeleton (225) comprises a rotate head front outer skeleton (2251) and a rotate head rear outer skeleton (2252), the rotate head front outer skeleton (2251) and the rotate head rear outer skeleton (2252) being both connected to a case of the rotate head actuator (215), the rotate head front outer skeleton (2251) being connected the rotate head rear outer skeleton (2252) and wrapping the rotate head actuator (215).

8. The robot head and neck assembly (20) according to claim 1, wherein:
the robot head and neck assembly (20) further comprises an outer skin (23), the outer skin (23) comprising a skull outer skin (231), a head outer skin (232), a swing head outer skin (233) and a lift head outer skin (234), the skull outer skin (231) being connected to the skull outer skeleton (222) and the head outer skeleton (221), the head outer skin (232) being connected to the head outer skeleton (221), the swing head outer skin (233) being connected to the swing head outer skeleton (223), and the lift head outer skin (234) being connected to the lift head outer skeleton (224).

9. The robot head and neck assembly (20) according to any one of claims 1 to 8, wherein the head and neck outer skeleton (22) is made of a lightweight material.

10. A robot, comprising the robot head and neck assembly (20) as defined in any one of claims 1 to 9.

## Patentansprüche

1. Roboterkopf- und -halsanordnung (20), umfassend:
ein Kopf- und Halsinnenskelett (21); und
ein Kopf- und Halsaußenskelett (22), das an einer Außenseite des Kopf- und Halsinnenskeletts (21) angeordnet ist und das Kopf- und Halsinnenskelett (21) umhüllt, wobei
das Kopf- und Halsinnenskelett (21) ein erstes Verbindungselement (211), einen Kopfschwenkaktuator (212), ein zweites Verbindungselement (213), einen Kopfhebeaktuator (214) und einen Kopfdrehaktuator (215) umfasst;
wobei das erste Verbindungselement (211) mit einem Ausgabeende des Kopfschwenkaktuators (212) verbunden ist, ein Gehäuse des Kopfschwenkaktuators (212) mit einem Ende des zweiten Verbindungselements (213) verbunden ist, das andere Ende des zweiten Verbindungselements (213) mit einem Ausgabeende des Kopfhebeaktuators (214) verbunden ist und ein Ausgabeende des Kopfdrehaktuators (215) mit einem Gehäuse des Kopfhebeaktuators (214) verbunden ist, **dadurch gekennzeichnet, dass**
das Kopf- und Halsaußenskelett (22) ein Schädelaußenskelett (222), ein Kopfaußenskelett (221), ein Kopfschwenkaußenskelett (223), ein Kopfhebeaußenskelett (224) und ein Kopfdrehaußenskelett (225) umfasst;
wobei das Schädelaußenskelett (222) mit dem Kopfaußenskelett (221) verbunden ist, das Kopfaußenskelett (221) das erste Verbindungselement (211) umhüllt und damit verbunden ist, das Kopfschwenkaußenskelett (223) mit dem zweiten Verbindungselement (213) verbunden ist, das Kopfschwenkaußenskelett (223) das zweite Verbindungselement (213) und den Kopfschwenkaktuator (212) umhüllt, das Kopfhebeaußenskelett (224) den Kopfhebeaktuator (214) umhüllt und damit verbunden ist und das Kopfdrehaußenskelett (225) den Kopfdrehaktuator (215) umhüllt und damit verbunden ist.

2. Roboterkopf- und -halsanordnung (20) nach Anspruch 1, wobei:
das Schädelaußenskelett (222) mit einem ersten Positionierungsvorsprung (2221) versehen ist und das Kopfaußenskelett (221) mit einer ersten Positionierungsnut (2213) versehen ist, wobei der erste Positionierungsvorsprung (2221) in der ersten Positionierungsnut (2213) schnappbefestigt ist.

3. Roboterkopf- und -halsanordnung (20) nach Anspruch 1, wobei:
das Kopfaußenskelett (221) ein linkes Kopfaußenskelett (2211) und ein rechtes Kopfaußenskelett (2212) umfasst, wobei das linke Kopfaußenskelett (2211) mit dem rechten Kopfaußenskelett (2212) verbunden ist und das linke Kopfaußenskelett (2211) und das rechte Kopfaußenskelett (2212) das erste Verbindungselement (211) umhüllen und damit verbunden sind.

4. Roboterkopf- und -halsanordnung (20) nach Anspruch 3, wobei:
das linke Kopfaußenskelett (2211) mit einem zweiten Positionierungsvorsprung (2211a) versehen ist und das rechte Kopfaußenskelett (2212) mit einer zweiten Positionierungsnut (2212a) versehen ist, wobei der zweite Positionierungsvorsprung (2211a) in der zweiten Positionierungsnut (2212a) schnappbefestigt ist.

5. Roboterkopf- und -halsanordnung (20) nach Anspruch 1, wobei:
das Kopfschwenkaußenskelett (223) ein vorderes Kopfschwenkaußenskelett (2231), ein hinteres Kopfschwenkaußenskelett (2232) und ein Verbindungsstück (2233) umfasst, wobei das vordere Kopfschwenkaußenskelett (2231) durch das Verbindungsstück (2233) mit dem hinteren Kopfschwenkaußenskelett (2232) verbunden ist und das zweite Verbindungselement (213) umhüllt und damit verbunden ist und das vordere Kopfschwenkaußenskelett (2231) und das hintere Kopfschwenkaußenskelett (2232) den Kopfschwenkaktuator (212) umhüllen.

6. Roboterkopf- und -halsanordnung (20) nach Anspruch 1, wobei:
das Kopfhebeaußenskelett (224) ein vorderes Kopfhebeaußenskelett (2241) und ein hinteres Kopfhebeaußenskelett (2242) umfasst, wobei das vordere Kopfhebeaußenskelett (2241) mit dem hinteren Kopfhebeaußenskelett (2242) verbunden ist und den Kopfhebeaktuator (214) umhüllt und das vordere Kopfhebeaußenskelett (2241) und das hintere Kopfhebeaußenskelett (2242) beide mit dem Gehäuse des Kopfhebeaktuators (214) verbunden sind.

7. Roboterkopf- und -halsanordnung (20) nach Anspruch 1, wobei:
das Kopfdrehaußenskelett (225) ein vorderes Kopfdrehaußenskelett (2251) und ein hinteres Kopfdrehaußenskelett (2252) umfasst, wobei das vordere Kopfdrehaußenskelett (2251) und das hintere Kopfdrehaußenskelett (2252) beide mit einem Gehäuse des Kopfdrehaktuators (215) verbunden sind, wobei das vordere Kopfdrehaußenskelett (2251) mit dem hinteren Kopfdrehaußenskelett (2252) verbunden ist und den Kopfdrehaktuator (215) umhüllt.

8. Roboterkopf- und -halsanordnung (20) nach Anspruch 1, wobei:
die Roboterkopf- und -halsanordnung (20) ferner eine Außenhaut (23) umfasst, wobei die Außenhaut (23) eine Schädelaußenhaut (231), eine Kopfaußenhaut (232), eine Kopfschwenkaußenhaut (233) und eine Kopfhebeaußenhaut (234) umfasst, wobei die Schädelaußenhaut (231) mit dem Schädelaußenskelett (222) und dem Kopfaußenskelett (221) verbunden ist, die Kopfaußenhaut (232) mit dem Kopfaußenskelett (221) verbunden ist, die Kopfschwenkaußenhaut (233) mit dem Kopfschwenkaußenskelett (223) verbunden ist und die Kopfhebeaußenhaut (234) mit dem Kopfhebeaußenskelett (224) verbunden ist.

9. Roboterkopf- und -halsanordnung (20) nach einem der Ansprüche 1 bis 8, wobei das Kopf- und Halsaußenskelett (22) aus einem Leichtbaumaterial hergestellt ist.

10. Roboter, umfassend die Roboterkopf- und -halsanordnung (20) nach einem der Ansprüche 1 bis 9.

## Revendications

1. Ensemble tête et cou de robot (20), comprenant :
un endosquelette tête et cou (21) ; et
un exosquelette tête et cou (22) disposé à l'extérieur de l'endosquelette tête et cou (21) et enveloppant l'endosquelette tête et cou (21), où
l'endosquelette tête et cou (21) comprend un premier élément de connexion (211), un actionneur d'oscillation de tête (212), un deuxième élément de connexion (213), un actionneur de soulèvement de tête (214) et un actionneur de rotation de tête (215) ;
où le premier élément de connexion (211) est raccordé à une extrémité de sortie de l'actionneur d'oscillation de tête (212), un boîtier de l'actionneur d'oscillation de tête (212) est raccordé à une extrémité du deuxième élément de connexion (213), l'autre extrémité du deuxième élément de connexion (213) est raccordée à une extrémité de sortie de l'actionneur de soulèvement de tête (214), et une extrémité de sortie de l'actionneur de rotation de tête (215) est raccordée à un boîtier de l'actionneur de soulèvement de tête (214), **caractérisé en ce que**
l'exosquelette tête et cou (22) comprend un exosquelette de crâne (222), un exosquelette de tête (221), un exosquelette d'oscillation de tête (223), un exosquelette de soulèvement de tête (224), et un exosquelette de rotation de tête (225) ;
où l'exosquelette de crâne (222) est raccordé à l'exosquelette de tête (221), l'exosquelette de tête (221) enveloppe le premier élément de connexion (211) et est raccordé à celui-ci, l'exosquelette d'oscillation de tête (223) est raccordé au deuxième élément de connexion (213), l'exosquelette d'oscillation de tête (223) enveloppe le deuxième élément de connexion (213) et l'actionneur d'oscillation de tête (212), l'exosquelette de soulèvement de tête (224) enveloppe l'actionneur de soulèvement de tête (214) et est raccordé à celui-ci, et l'exosquelette de rotation de tête (225) enveloppe l'actionneur de rotation de tête (215) et est raccordé à celui-ci.

2. Ensemble tête et cou de robot (20) selon la revendication 1, où :
l'exosquelette de crâne (222) est pourvu d'un premier bossage de positionnement (2221), et
l'exosquelette de tête (221) est pourvu d'une première rainure de positionnement (2213), le premier bossage de positionnement (2221) étant ajusté par enclenchement dans la première rainure de positionnement (2213).

3. Ensemble tête et cou de robot (20) selon la revendication 1, où :
l'exosquelette de tête (221) comprend un exosquelette de tête gauche (2211) et un exosquelette de tête droit (2212), l'exosquelette de tête gauche (2211) étant raccordé à l'exosquelette de tête droit (2212), et l'exosquelette de tête gauche (2211) et l'exosquelette de tête droit (2212) enveloppant le premier élément de connexion (211) et étant raccordés à celui-ci.

4. Ensemble tête et cou de robot (20) selon la revendication 3, où l'exosquelette de tête gauche (2211) est pourvu d'un deuxième bossage de positionnement (2211a), et l'exosquelette de tête droit (2212) est pourvu d'une deuxième rainure de positionnement (2212a), le deuxième bossage de positionnement (2211a) étant ajusté par enclenchement dans la deuxième rainure de positionnement (2212a).

5. Ensemble tête et cou de robot (20) selon la revendication 1, où :
l'exosquelette d'oscillation de tête (223) comprend un exosquelette d'oscillation de tête avant (2231), un exosquelette d'oscillation de tête arrière (2232), et une pièce de connexion (2233), l'exosquelette d'oscillation de tête avant (2231) étant raccordé par la pièce de connexion (2233) à l'exosquelette d'oscillation de tête arrière (2232), et enveloppant le deuxième élément de connexion (213) et étant raccordé à celui-ci, et l'exosquelette d'oscillation de tête avant (2231) et l'exosquelette d'oscillation de tête arrière (2232) enveloppant l'actionneur d'oscillation de tête (212).

6. Ensemble tête et cou de robot (20) selon la revendication 1, où :
l'exosquelette de soulèvement de tête (224) comprend un exosquelette de soulèvement de tête avant (2241) et un exosquelette de soulèvement de tête arrière (2242), l'exosquelette de soulèvement de tête avant (2241) étant raccordé à l'exosquelette de soulèvement de tête arrière (2242) et enveloppant l'actionneur de soulèvement de tête (214), et l'exosquelette de soulèvement de tête avant (2241) et l'exosquelette de soulèvement de tête arrière (2242) étant raccordés les deux au boîtier de l'actionneur de soulèvement de tête (214).

7. Ensemble tête et cou de robot (20) selon la revendication 1, où l'exosquelette de rotation de tête (225) comprend un exosquelette de rotation de tête avant (2251) et un exosquelette de rotation de tête arrière (2252), l'exosquelette de rotation de tête avant (2251) et l'exosquelette de rotation de tête arrière (2252) étant raccordés les deux à un boîtier de l'actionneur de rotation de tête (215), l'exosquelette de rotation de tête avant (2251) étant raccordé à l'exosquelette de rotation de tête arrière (2252) et enveloppant l'actionneur de rotation de tête (215).

8. Ensemble tête et cou de robot (20) selon la revendication 1, où :
ledit ensemble tête et cou de robot (20) comprend en outre une peau extérieure (23), ladite peau extérieure (23) comprenant une peau extérieure de crâne (231), une peau extérieure de tête (232), une peau extérieure d'oscillation de tête (233) et une peau extérieure de soulèvement de tête (234), la peau extérieure de crâne (231) étant raccordée à l'exosquelette de crâne (222) et à l'exosquelette de tête (221), la peau extérieure de tête (232) étant raccordée à l'exosquelette de tête (221), la peau extérieure d'oscillation de tête (233) étant raccordée à l'exosquelette d'oscillation de tête (223), et la peau extérieure de soulèvement de tête (234) étant raccordée à l'exosquelette de soulèvement de tête (224).

9. Ensemble tête et cou de robot (20) selon l'une des revendications 1 à 8, où l'exosquelette tête et cou (22) est constitué d'un matériau léger.

10. Robot, comprenant l'ensemble tête et cou de robot (20) selon l'une des revendications 1 à 9.
